# EUROPÄISCHE PATENTSCHRIFT

(11) **EP 3 132 301 B1**
(45) Veröffentlichungstag und Bekanntmachung des Hinweises auf die Patenterteilung: **14.09.2022**
(21) Anmeldenummer: 15716802.2
(22) Anmeldetag: 16.04.2015
(51) Int. Cl.: G02B 27/01, G02C 7/08

(54) **BRILLENGLAS FÜR EINE AUF DEN KOPF EINES BENUTZERS AUFSETZBARE UND EIN BILD ERZEUGENDE ANZEIGEVORRICHTUNG**
EYEGLASS LENS FOR A DISPLAY DEVICE, WHICH DISPLAY DEVICE CAN BE PLACED ON THE HEAD OF A USER AND GENERATES AN IMAGE
VERRE DE LUNETTES DESTINÉ À UN DISPOSITIF D'AFFICHAGE POUVANT ÊTRE PORTÉ SUR LA TÊTE D'UN UTILISATEUR ET PRODUISANT UNE IMAGE

(30) Priorität: 17.04.2014 DE 102014207499
(43) Veröffentlichungstag der Anmeldung: 22.02.2017
(73) Patentinhaber: tooz technologies GmbH, 73430 Aalen (DE)
(72) Erfinder: RIEDEL, Lisa, 07749 Jena (DE); DOBSCHAL, Hans-Jürgen, 99518 Bad Sulza (DE); LINDIG, Karsten, 99084 Erfurt (DE); MAUL, Manfred, 73434 Aalen (DE); DAVIDKOV, Momchil, 73431 Aalen (DE); TONOVA, Diana, 73434 Aalen (DE); PÜTZ, Jörg, 73431 Aalen (DE); KRAUSE, Wolf, 73457 Essingen (DE); MICHELS, Georg, 73430 Aalen (DE); KELCH, Gerhard, 73434 Aalen (DE)
(74) Vertreter: Patentanwälte Geyer, Fehners & Partner mbB
(86) Internationale Anmeldenummer: PCT/EP2015/058278
(87) Internationale Veröffentlichungsnummer: WO 2015/158833

(56) Entgegenhaltungen:
- EP-A1- 1 748 305
- WO-A1-2004/001484
- WO-A2-2009/083977
- WO-A2-2011/095379
- FR-A1- 2 938 934

## Beschreibung

Die vorliegende Erfindung betrifft ein Brillenglas mit den Merkmalen des Oberbegriffs des Anspruches 1 sowie eine Anzeigevorrichtung mit einem solchen Brillenglas.

Aufgrund der gekrümmten Vorder- und Rückseite ist die Herstellung eines solchen Brillenglases mit einem Lichtführungskanal schwierig. Insbesondere ist die Herstellung eines Lichtführungskanals, der die gewünschten optischen Eigenschaften aufweist, technisch schwierig.

Die WO 2004/001484 A1 beschreibt ein Brillenglas der eingangs genannten Art. Die FR 2 938 934 A1 offenbart ein einstückiges Brillenglas, das eine sich von der Randfläche in das Brillenglas hinein erstreckende Ausnehmung aufweist, in die ein als Lichtführungskanal dienender Einsatz eingeführt ist. Die EP 1 748 305 A1 beschreibt ein mehrschaliges Brillenglas, bei dem die Kanalschale als planparallele Platte ausgebildet ist.

Es ist Aufgabe der Erfindung, ein Brillenglas der eingangs genannten Art so weiterzubilden, dass es leicht hergestellt werden kann.

Die Erfindung ist im Anspruch 1 und im Anspruch 12 definiert. Vorteilhafte Weiterbildungen sind in den abhängigen Ansprüchen angegeben.

Durch die vergrabene Ausbildung der beiden Reflexionsflächen kann sichergestellt werden, dass eine gute Führung der Lichtbündel stattfindet, selbst wenn die Vorder- und/oder Rückseite des Brillenglases verschmutzt ist. Ferner kann auch das Brillenglas gut hergestellt werden, da die erste und zweite Reflexionsfläche beispielsweise auf der Kanalschale gebildet werden können und danach die drei Schalen miteinander verbunden werden können. Dies vereinfacht den Herstellungsprozeß.

Bei dem erfindungsgemäßen Brillenglas ist die gekrümmte Kanalschale über die gekrümmte erste Reflexionsfläche mit der Außenschale und über die gekrümmte zweite Reflexionsfläche mit der Innenschale verbunden.

Die Kanalschale ist als Abstandsschale zwischen der Außen- und Innenschale angeordnet sein, so dass die Außen- und Innenschale nicht in direktem Kontakt stehen. Die Kanalschicht steht somit vollflächig über ihre erste Materialgrenzfläche in Kontakt mit der Außenschale und steht vollflächig über ihre zweite Materialgrenzfläche in Kontakt mit der Innenschale. Somit liegt ein dreischaliger Aufbau vor. In Draufsicht auf das Brillenglas gesehen weisen die Außenschale, die Kanalschale und die Innenschale bevorzugt die gleichen Abmessungen auf.

Ferner kann die von der Innenschale wegweisende erste Seite der Außenschale die Vorderseite des Brillenglases und die von der Außenschale wegweisende erste Seite der Innenschale die Rückseite des Brillenglases bilden.

Die Rückseite weist eine Krümmung auf, die so gewählt ist, dass eine Fehlsichtigkeitskorrektur bewirkt wird. Dies führt zu dem Vorteil, dass auch für die ausgekoppelten Lichtbündel die gewünschte Fehlsichtigkeitskorrektur vorliegt, da diese so ausgekoppelt werden, dass sie über die Rückseite der Innenschale aus dem Brillenglas austreten.

Mit dem erfindungsgemäßen Brillenglas kann somit mittels der Kanalschale die Führung der Lichtbündel bezüglich einer gewünschten Abbildung optimiert werden. Unabhängig davon kann mittels der Innenschale die gewünschte Fehlsichtigkeitskorrektur optimiert werden. Somit können mit dem erfindungsgemäßen Brillenglas die Abbildungseigenschaften einerseits über die Kanalschale und die Fehlsichtigkeitskorrektureigenschaften andererseits über die Innenschale voneinander unabhängig ausgelegt und eingestellt werden.

Des weiteren kann der Auskoppelabschnitt Teil der Kanalschale sein. Dies führt zu einer weiteren Vereinfachung der Herstellbarkeit des erfindungsgemäßen Brillenglases.

Ferner können die Innenschale, die Kanalschale und die Außenschale aus dem gleichen Material gebildet sein. In diesem Fall weisen alle drei Schalen die gleiche Brechzahl auf. Es ist jedoch auch möglich, dass die Kanalschale aus einem anderen Material als die Innen- und/oder Außenschale gebildet ist. Insbesondere können alle drei Schalen aus unterschiedlichen Materialien gebildet sein.

Die Innenschale ist mit der Kanalschale flächig verbunden und die Kanalschale ist mit der Außenschale flächig verbunden. Die Schalen können z.B. miteinander verklebt oder verkittet sein.

Bevorzugt sind die einander zu weisenden Seiten von Innenschale und Kanalschale sowie Außenschale und Kanalschale zueinander komplementär ausgebildet. Insbesondere können diese einander zuweisenden Seiten sphärisch gekrümmt sein.

Des weiteren kann die Vorderseite und/oder Rückseite sphärisch gekrümmt sein.

Durch diesen mehrschaligen Aufbau kann die Dicke des Brillenglases möglichst gering gehalten werden. Gleichzeitig kann der Lichtführungskanal so ausgebildet werden, dass die gewünschten guten Abbildungseigenschaften sichergestellt werden können.

Der Auskoppelabschnitt kann mehrere nebeneinander angeordnete reflektive Umlenkflächen aufweisen. Die reflektiven Umlenkflächen können auch als reflektive Facetten bezeichnet werden. Sie können eine Reflektivität von nahezu 100 % aufweisen und in diesem Fall als Spiegelflächen bezeichnet werden. Es ist auch möglich, dass sie eine geringere Reflektivität aufweisen und somit teiltransparent ausgebildet sind.

Die reflektiven Umlenkflächen können jeweils plan oder gekrümmt ausgebildet sein. Ferner können die Umlenkflächen fresnelartig eine gekrümmte Reflexionsfläche nachstellen, die neben einer reinen Strahlumlenkung auch eine abbildende Eigenschaft aufweist.

Der Auskoppelabschnitt kann im Brillenglas vergraben und somit von Vorder- und Rückseite beabstandet sein. Insbesondere kann der Auskoppelabschnitt an einer Materialgrenzfläche der Kanalschicht ausgebildet oder in der Kanalschicht vergraben sein.

Auf der Vorderseite kann eine phototrope Schicht gebildet sein. Die phototrope Schicht kann als passive Schicht oder als aktive Schicht ausgebildet sein.

Die Dicke der Kanalschale kann im Bereich des Lichtführungskanals größer als im restlichen Bereich sein. Es ist jedoch auch möglich, dass die Kanalschale eine (im wesentlichen konstante) Dicke aufweist oder dass die Dicke der Kanalschale in Richtung vom Einkoppelabschnitt zum Auskoppelabschnitt abnimmt.

Der Abstand der beiden Reflexionsflächen kann in der Richtung vom Einkoppelabschnitt zum Auskoppelabschnitt abnehmen oder auch konstant sein.

Des weiteren kann zumindest eine der beiden Reflexionsflächen eine abbildende Eigenschaft aufweisen. Insbesondere kann die abbildende Eigenschaft durch die Krümmung der Reflexionsfläche gegeben sein.

Mindestens eine der beiden Reflexionsflächen kann ein Interferenzschichtsystem aufweisen. Das Interferenzschichtsystem kann aus mindestens zwei unterschiedlichen Materialien mit unterschiedlichen Brechzahlen ausgebildet sein. Insbesondere kann das Interferenzschichtsystem zwei, drei, vier oder fünf unterschiedliche Materialien aufweisen. Die Brechzahlen der Materialien können im Bereich von 1,4 bis 2,5 bei einer Wellenlänge von 546 nm liegen.

Insbesondere kann mindestens eine der beiden Reflexionsflächen so ausgebildet sein, dass sie für Einfallswinkel im Bereich von 0° bis zu einem vorbestimmten ersten Grenzwinkel von kleiner als 90° transmissiv und für einen Einfallswinkel größer als ein vorbestimmter zweiter Grenzwinkel, der größer oder gleich dem ersten Grenzwinkel ist, reflektiv ist. Diese Transmissions-/Reflexionseigenschaften liegen bevorzugt für Strahlung aus dem sichtbaren Wellenlängenbereich vor. Der erste Grenzwinkel kann z.B. im Bereich von 30°-60°, bevorzugt im Bereich von 35°-45° liegen. Der zweite Grenzwinkel kann z.B. im Bereich von 45°-65° bevorzugt im Bereich von 50°-60° liegen.

Ferner kann mindestens eine der beiden Reflexionsflächen als teilreflektive Beschichtung oder als reflektive Beschichtung (Spiegelschicht) ausgebildet sein. Dazu kann z.B. eine metallische Beschichtung verwendet werden. Es liegt somit quasi eine Art Rückflächenspiegel vor.

Ferner kann zumindest eine der beiden Reflexionsflächen so ausgebildet sein, dass sie Licht mit einem ersten Polarisationszustand reflektiert und Licht mit einem dazu orthogonalen Polarisationszustand transmittiert. In diesem Fall werden die Lichtbündel bevorzugt so erzeugt, dass sie den ersten Polarisationszustand aufweisen.

Der Einkoppelabschnitt kann in einem Randbereich des Brillenglases und der Auskoppelabschnitt kann in einem Mittelbereich des Brillenglases ausgebildet sein. Die Einkopplung kann beispielsweise über die Stirnseite des Brillenglases oder auch über die Rückseite des Brillenglases erfolgen.

Die Innenschale, die Kanalschale und die Außenschale können jeweils einstückig ausgebildet sein. Es ist jedoch auch möglich, dass die Innenschale, die Kanalschale und/oder die Außenschale mehrstückig ausgebildet ist.

Es wird ferner eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik, die ein Brillenglas nach einem der obigen Ansprüche aufweist und die das erzeugte Bild im auf dem Kopf des Benutzers aufgesetzten Zustand der Haltevorrichtung so abbildet, dass es der Benutzer als virtuelles Bild wahrnehmen kann, bereitgestellt.

Die Abbildungsoptik kann das Brillenglas als einziges optisches Element aufweisen. Es ist jedoch auch möglich, dass die Abbildungsoptik neben dem Brillenglas noch zumindest ein weiteres optisches Element umfaßt. Insbesondere kann die Außenschale zusammen mit dem zumindest einem weiteren optischen Element einstückig ausgebildet sein. Alternativ ist es möglich, dass die Außenschale mit dem zumindest einen weiteren optischen Element (z.B. durch Verkitten oder Verkleben) verbunden ist. Ferner kann das zumindest eine weitere optische Element von der Außenschale beabstandet sein.

Das zumindest eine weitere optische Element kann z.B. eine Kollimationsoptik sein, die zwischen dem Brillenglas und dem Bilderzeugungsmodul angeordnet ist, so dass die Lichtbündel vom Bilderzeugungsmodul als kollimierte Bündel in das Brillenglas eingekoppelt werden können.

Ferner kann die Anzeigevorrichtung eine Steuereinheit aufweisen, die das Bilderzeugungsmodul ansteuert.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Der Bildgeber kann eine Mehrzahl von Pixeln aufweisen, die z.B. in Zeilen und Spalten angeordnet sein können. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Die erfindungsgemäße Anzeigevorrichtung kann weitere, dem Fachmann bekannte Elemente aufweisen, die zu ihrem Betrieb notwendig sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung;
- Fig. 2: eine vergrößerte Teilschnittansicht des ersten Brillenglases 3 einschließlich einer schematischen Darstellung des Bilderzeugungsmoduls;
- Fig. 3: eine Darstellung der Transmissivität/Reflektivität in Abhängigkeit des Einfallswinkels;
- Fig. 4: eine schematische Darstellung zur Erläuterung der Winkelabhängigkeit der Reflexionsflächen 24 und 25;
- Fig. 5: eine Darstellung die die Schichtfolge und die Schichtdicken des Interferenzschichtsystems für die zweite Reflexionsfläche 24 zeigt;
- Fig. 6: das Transmissionsverhalten zwischen Kanalschale 21 und Außenschale 19 ohne zusätzliche Reflexionsfläche;
- Fig. 7: das Transmissionsverhalten zwischen Kanalschale 21 und Außenschale 19 mit zusätzlicher Reflexionsfläche 24;
- Fig. 8: der Schichtaufbau der Reflexionsfläche gemäß der Ausführungsform von Fig. 7;
- Fig. 9: das Transmissionsverhalten einer weiteren Ausführungsform der Reflexionsfläche bei einem erfindungsgemäßen Brillenglas;
- Fig. 10: der Schichtaufbau der Reflexionsfläche der Ausführungsform gemäß Fig. 9;
- Fig. 11: eine vergrößerte Teilschnittansicht einer weiteren Ausführungsform des ersten Brillenglases 3 einschließlich einer schematischen Darstellung des Bilderzeugungsmoduls, und
- Fig. 12: eine vergrößerte Teilschnittansicht einer weiteren Ausführungsform des ersten Brillenglases 3 einschließlich einer schematischen Darstellung des Bilderzeugungsmoduls.

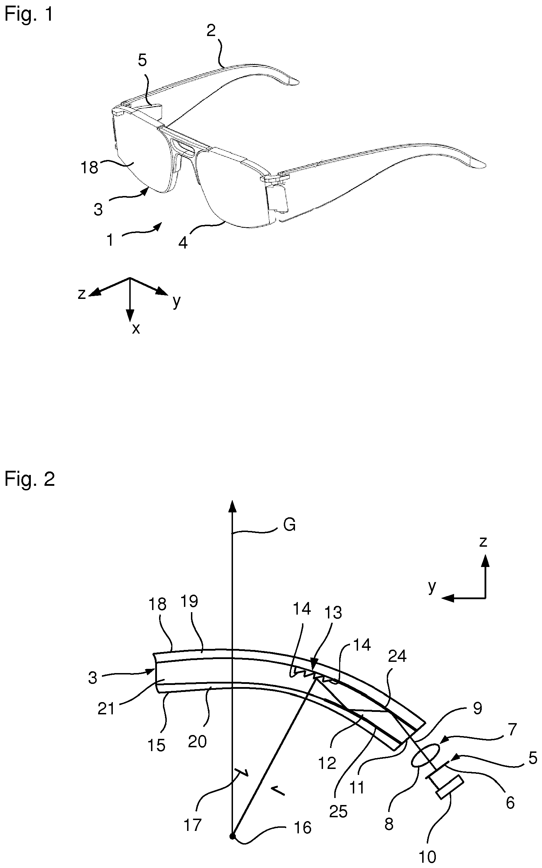

Bei der in Fig. 1 gezeigten Ausführungsform umfaßt die erfindungsgemäße Anzeigevorrichtung 1 eine auf den Kopf eines Benutzers aufsetzbare Haltevorrichtung 2, die z.B. in Art eines herkömmlichen Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3, 4 kann z.B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsfeld eingespiegelt werden kann, wie nachfolgend beschrieben wird.

Dazu umfaßt die Anzeigevorrichtung 1 ein Bilderzeugungsmodul 5, das im Bereich des rechten Brillenbügels der Haltevorrichtung 2 angeordnet sein kann, wie in Fig. 1 schematisch dargestellt ist. Das Bilderzeugungsmodul 5 kann ein flächiges Bilderzeugungselement 6 (Fig. 2), wie z.B. einen OLED-, einen CMOS- oder einen LCoS-Chip oder eine Kippspiegelmatrix, mit einer Vielzahl von z.B. in Spalten und Zeilen angeordneten Pixeln aufweisen.

Die Brillengläser 3 und 4 und insbesondere das erste Brillenglas 3 sind nur beispielshalber zusammen mit der erfindungsgemäßen Anzeigevorrichtung 1 beschrieben. Die Brillengläser 3, 4 bzw. zumindest das erste Brillenglas 3 sind jeweils für sich als erfindungsgemäßes Brillenglas 3, 4 oder als erfindungsgemäßes optisches Element ausgebildet. Das erfindungsgemäße optische Element kann auch in anderem Zusammenhang als mit der hier beschriebenen Anzeigevorrichtung 1 eingesetzt werden. Daher kann das optische Element, wenn es als Brillenglas ausgebildet ist, natürlich auch als zweites Brillenglas 4 ausgebildet sein.

Wie am besten aus der vergrößerten, schematischen Teilschnittansicht in Fig. 2 ersichtlich ist, weist die Anzeigevorrichtung 1 eine Abbildungsoptik 7 auf, die ein zwischen dem Bilderzeugungselement 6 bzw. dem Bildgeber 6 und dem ersten Brillenglas 3 angeordnetes Optikelement 8 enthält. Des weiteren dient das erste Brillenglas 3 selbst auch als Teil der Abbildungsoptik 7.

Von jedem Pixel des Bildgebers 6 kann ein Lichtbündel 9 ausgehen. Durch eine entsprechende Ansteuerung der Pixel des Bildgebers 6 mittels einer Steuereinheit 10, die Teil des Bilderzeugungsmoduls 5 sein kann, kann das gewünschte Bild erzeugt werden. In Fig. 2 ist stellvertretend für die Lichtbündel 9 der Strahlengang eines Lichtstrahls eingezeichnet, so dass nachfolgend auch von dem Lichtstrahl 9 die Rede ist.

Der vom Bildgeber 6 ausgehende Lichtstrahl 9 läuft durch das Optikelement 8 und tritt über einen Einkoppelabschnitt 11 (hier die Stirnseite des ersten Brillenglases 3) in das erste Brillenglas 3 ein und wird in diesem entlang eines Lichtführungskanals 12 bis zu einem Auskoppelabschnitt 13 geführt. Der Auskoppelabschnitt 13 weist mehrere nebeneinander angeordnete reflektive Umlenkflächen 14 (die auch als reflektive Facetten bezeichnet werden können) auf, an denen eine Reflexion der Lichtstrahlen 9 in Richtung zu einer Rückseite 15 des ersten Brillenglases 3 stattfindet, so dass die Lichtstrahlen 9 über die Rückseite 15 aus dem ersten Brillenglas 3 austreten.

Somit kann ein Benutzer, wenn er die erfindungsgemäße Anzeigevorrichtung 1 bestimmungsgemäß auf dem Kopf trägt, das mittels des Bildgebers 6 erzeugte Bild als virtuelles Bild wahrnehmen, wenn er auf den Auskoppelabschnitt 13 blickt. Bei der hier beschriebenen Ausführungsform muß der Benutzer bezogen auf die Blickrichtung G eines Geradeausblicks um ca. 40° nach rechts schauen. In Fig. 2 ist zur Verdeutlichung der Drehpunkt 16 des Auges des Benutzers sowie die Eyebox 17 bzw. die Austrittspupille 17 der Abbildungsoptik 7 eingezeichnet. Die Eyebox 17 ist der Bereich, der durch die Anzeigevorrichtung 1 bereitgestellt wird und in dem sich das Auge des Benutzers bewegen kann und er stets noch das erzeugte Bild als virtuelles Bild sehen kann.

Obwohl bei der beschriebenen Ausführungsform die Einkopplung über die Stirnseite des ersten Brillenglases 3 durchgeführt ist und somit der Einkoppelabschnitt 11 auf der Stirnseite des ersten Brillenglases 3 ausgebildet ist, ist es auch möglich, eine Einkopplung über die Rückseite 15 des ersten Brillenglases durchzuführen.

Wie in der schematischen Darstellung in Fig. 2 gezeigt ist, ist sowohl die Rückseite 15 als auch die Vorderseite 18 des ersten Brillenglases 3 gekrümmt ausgebildet.

Das erste Brillenglas ist ferner, wie der Darstellung in Fig. 2 zu entnehmen ist, dreischalig ausgebildet und umfaßt eine Außenschale 19, eine Innenschale 20 sowie eine dazwischen angeordnete Kanalschale 21.

Die von der Innenschale 20 wegweisende erste Seite der Außenschale 19 bildet die gekrümmte Vorderseite 18 des ersten Brillenglases. Die von der Außenschale 19 wegweisende erste Seite der Innenschale 20 bildet die Rückseite 15 des ersten Brillenglases.

Zur Bildung des Lichtführungskanals 12 ist zwischen der Kanalschale 21 und der Außenschale 19 eine erste Reflexionsfläche 24 und zwischen der Kanalschale 21 und der Innenschale 20 eine zweite Reflexionsfläche 25 ausgebildet. Die beiden Reflexionsflächen 24, 25 erstrecken sich vom Einkoppelabschnitt 11 bis zum Auskoppelabschnitt 13. Somit können die Lichtbündel 9 durch Reflexion an den Reflexionsflächen 24 und 25 vom Einkoppelabschnitt 11 bis zum Auskoppelabschnitt 13 geführt werden, so dass sie dann nach Reflexion an den reflektiven Umlenkflächen 14 über die Rückseite 15 des ersten Brillenglases ausgekoppelt werden können.

Die erste und zweite Reflexionsfläche 24 und 25 können z.B. auf der Kanalschale 21 ausgebildet sein. Es ist jedoch auch möglich, dass die erste Reflexionsfläche an der Außenschale 19 und die zweite Reflexionsfläche an der Innenschale 20 ausgebildet ist. Wie in Fig. 2 angedeutet ist, stehen die Innenschale 20 und die Kanalschale 21 einerseits sowie die Kanalschale 21 und die Außenschale 19 andererseits jeweils flächig miteinander in Kontakt. Sie können z.B. miteinander verklebt oder verkittet sein. Man kann daher auch sagen, dass im Bereich des Lichtführungskanal 12 die Kanalschale 21 über die erste Reflexionsfläche 24 mit der Außenschale 19 verbunden ist und dass im Bereich des Lichtführungskanals 12 die Kanalschale 21 mit der Innenschale 20 über die zweite Reflexionsfläche 25 verbunden ist.

Die erste und/oder zweite Reflexionsfläche 24 und 25 können z.B. eine teilreflektive Beschichtung oder eine reflektive Beschichtung (Spiegelschicht) sein. Dazu kann z.B. eine metallische Beschichtung verwendet werden. Es ist jedoch auch möglich, eine Beschichtung zu verwenden, die für einen ersten Polarisationszustand reflektiv und einen dazu orthogonalen Polarisationszustand transmissiv ist. In diesem Fall weisen die Lichtbündel 9 dann den ersten Polarisationszustand auf, so dass die Führung im Lichtführungskanal 12 gewährleistet ist.

Des weiteren ist es möglich, dass die erste und/oder zweite Reflexionsfläche 24 und 25 als Interferenzschichtsystem ausgebildet ist, das abwechselnd dünne Schichten mit höherer und niedrigerer Brechzahl aufweist. Im allgemeinen Fall kann das Interferenzschichtsystem aus k optischen Schichten S₁, S₂, ... Sₖ (k > 2) aus m Materialien M₁, M₂, ... Mₘ (m > 2), die hinsichtlich ihrer Brechzahlen N₁, N₂, ... Nₘ (m > 2) verschieden sind, gebildet sein. Die Brechzahlen können z.B. im Bereich von 1,4 - 2,5 bei einer Wellenlänge von 546 nm liegen. Solche Interferenzschichtsysteme sind dem Fachmann grundsätzlich bekannt und können hinsichtlich der gewünschten optischen Eigenschaften optimiert werden. Bei der hier vorliegenden Ausführungsform sind die Interferenzschichtsysteme so hinsichtlich des sichtbaren Spektralbereiches optimiert, dass sie für einen Einfallswinkel α von 0° bis ca. 35° transmissiv sind (praktisch 100 % des einfallenden Lichtes wird transmittiert) und für einen Einfallswinkel α im Bereich von 50° bis 90° reflektiv sind (nahezu 100 % Reflektivität). Im Übergangsbereich von 30° bis 50° ändert sich die Transmission von 100 % zu 0 %.

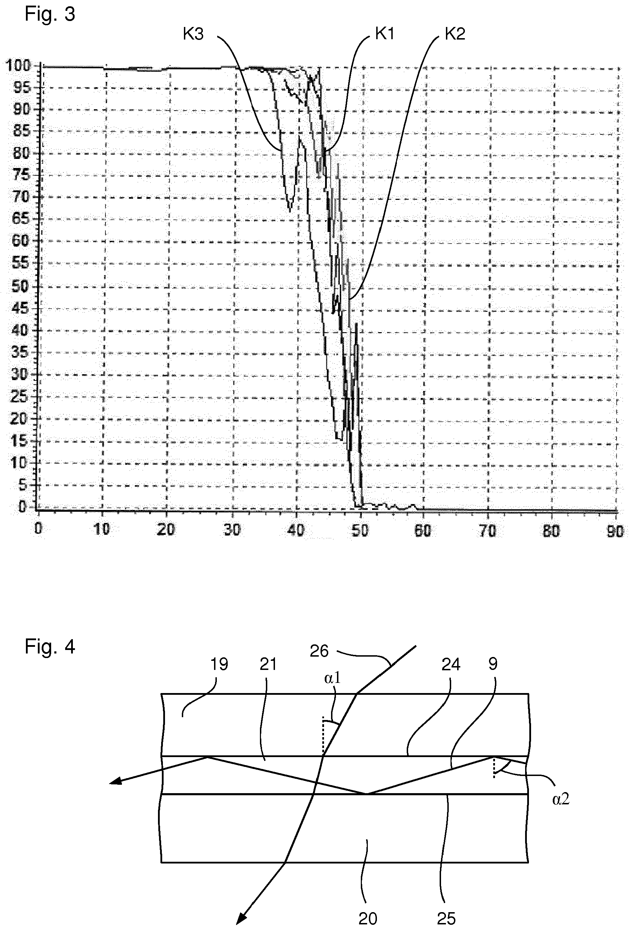

In Fig. 3 ist die Transmissivität entlang der y-Achse in % gegenüber dem Einfallswinkel α in ° entlang der x-Achse dargestellt. Dabei zeigt die Kurve K1 das Transmissions- bzw. Reflexionsverhalten des Schichtsystems für Strahlung mit einer Wellenlänge von 400 nm. Die Kurve K2 zeigt das Verhalten für Strahlung mit einer Wellenlänge von 450 nm und die Kurve K3 zeigt das Verhalten für Strahlung mit einer Wellenlänge von 680 nm.

In Fig. 4 ist dieses Verhalten schematisch nochmals dargestellt. Die Lichtbündel 9 treffen mit einem Einfallswinkel α2 von größer als 50° (bezogen auf das Lot der entsprechenden Reflexionsfläche 24, 25) auf die entsprechende Reflexionsfläche 24 und 25 und werden daher reflektiert. Umgebungslicht 26 trifft hingegen mit einem Einfallswinkel α1 von kleiner als 35° auf die Reflexionsfläche 24, 25 und wird somit transmittiert.

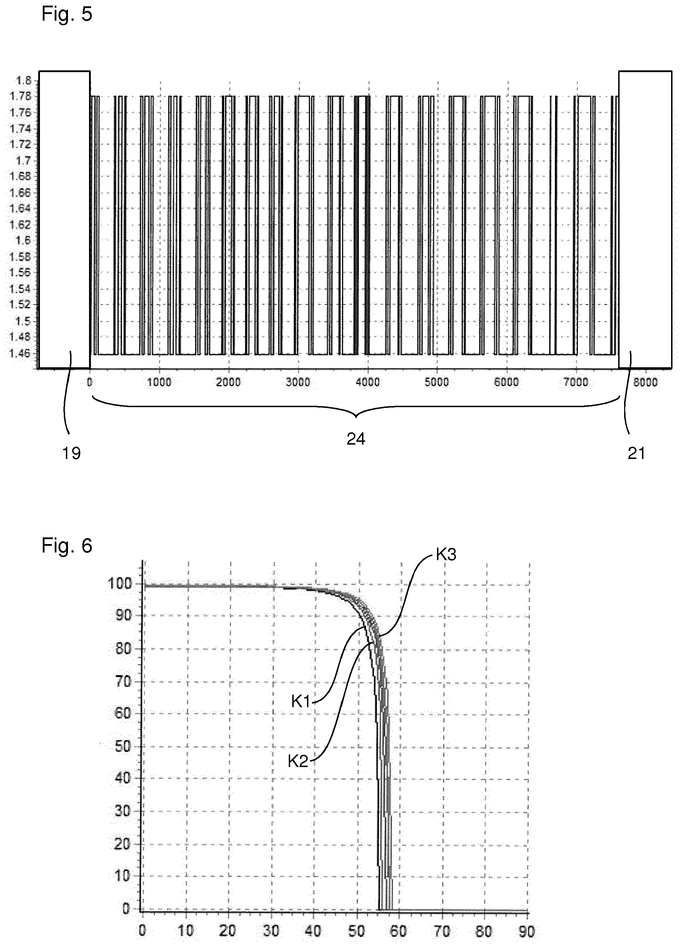

Bei dem hier in Verbindung mit Fig. 3 und 4 beschriebenen Ausführungsbeispiel wurde davon ausgegangen, dass die Innenschale 20, die Kanalschale 21 und die Außenschale 19 jeweils eine Brechzahl von 1,81 aufweisen. Für das Interferenzschichtsystem sind zwei unterschiedliche Materialien mit Brechzahlen N₁ = 1,787 und N₂ = 1,459 verwendet, wobei k 113 beträgt. In Fig. 5 ist schematisch der entsprechende Aufbau der zweiten Reflexionsschicht 24 gezeigt, wobei entlang der x-Achse (horizontale Achse) die Dicke der Schicht in nm und entlang der y-Achse (vertikale Achse) die Brechzahl aufgetragen ist.

Natürlich kann die zweite Reflexionsfläche 25 in gleicher Weise wie die erste Reflexionsfläche 24 als Interferenzschichtsystem gemäß Fig. 5 ausgebildet sein.

Falls die Brechzahl der Kanalschale 21 größer ist als die Brechzahlen der Innen- und Außenschale 20, 19, kann ab einem vorbestimmten Grenzwinkel innere Totalreflexion auftreten. Wenn z.B. die Brechzahl der Kanalschicht 21 1,81 beträgt und die Brechzahlen der Innen- und Außenschale 20, 19 jeweils 1,519 betragen, beträgt der Grenzwinkel ca. 58°. Das entsprechende Transmissionsverhalten ist in Fig. 6 schematisch dargestellt, wobei entlang der x-Achse (horizontale Achse) der Einfallswinkel in ° und entlang der y-Achse (vertikale Achse) die Transmissivität in % aufgetragen ist. Bei dieser Darstellung sind in gleicher Weise wie bei Fig. 3 die Kurven K1, K2 und K3 gekennzeichnet, die das Verhalten für die Wellenlängen 400 nm, 450 nm sowie 680 nm zeigen.

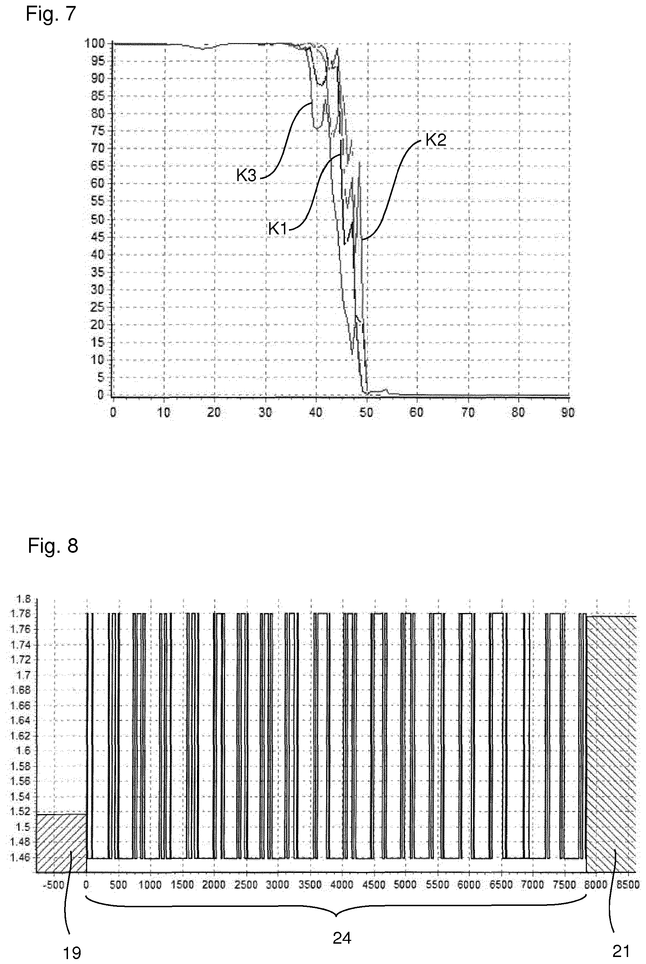

Wenn nun ein Interferenzschichtsystem mit zwei Materialien mit den Brechzahlen 1,787 und 1,459 mit 113 Schichten vorgesehen wird, kann das in Fig. 7 gezeigte Transmissionsverhalten erzielt werden. Die Darstellung in Fig. 7 entspricht der Darstellung in Fig. 6. Es ist ebenfalls das Transmissionsverhalten für die Wellenlängen 400 nm (Kurve K1), 450 nm (Kurve K2) sowie 680 nm (Kurve K3) eingezeichnet. Aus dem Vergleich der Darstellung in Fig. 6 und 7 läßt sich entnehmen, dass eine Lichtführung durch Reflexion an dem Interferenzschichtsystem bis zu einem Einfallswinkel von 50° und somit um 8° mehr als ohne Interferenzschichtsystem bereitgestellt wird.

In Fig. 8 ist der Aufbau des entsprechenden Interferenzschichtsystems in gleicher Weise wie in Fig. 5 dargestellt.

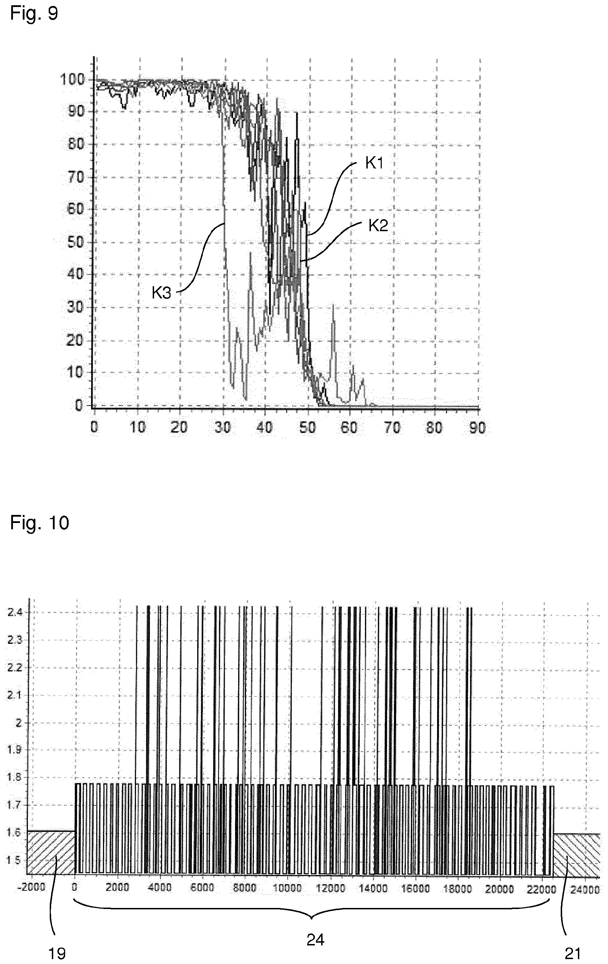

In einer weiteren Ausführungsform kann das Interferenzschichtsystem drei verschiedene Materialien mit den Brechzahlen 1,787, 1,459 sowie 2,472 aufweisen und zwischen einer Außenschale 19 und einer Kanalschale 21 angeordnet sein, die jeweils aus einem Material mit der Brechzahl 1,62 gebildet sind. Bei einem Schichtsystem mit 263 Schichten für das Interferenzschichtsystem kann das in Fig. 9 gezeigte Transmissionsverhalten erzielt werden. Die Darstellung in Fig. 9 entspricht der Darstellung in Fig. 7. Es ist jeweils für das Transmissionsverhalten für die Wellenlängen 400 nm (Kurve K1), 450 nm (Kurve K2) sowie 680 nm (Kurve K3) eingezeichnet.

In Fig. 10 ist der Schichtaufbau in gleicher Weise wie in Fig. 8 dargestellt.

Durch den beschriebenen dreischaligen Aufbau des ersten Brillenglases 3 wird der Vorteil erreicht, dass die Führung der Lichtbündel 9 im Lichtführungskanal 12 unabhängig von der Sauberkeit der Vorder- und/oder Rückseite 18, 15 des ersten Brillenglases ist. Somit führen etwaige Verschmutzungen der Vorderseite 18 und/oder der Rückseite 15 zu keiner Verschlechterung bei der Führung der Lichtbündel 9 vom Einkoppelabschnitt 11 bis zum Auskoppelabschnitt 13.

Des weiteren kann die Rückseite 15 eine Krümmung aufweisen, mit der eine Fehlsichtigkeit eines Benutzers korrigiert wird. Somit kann in vorteilhafter Weise die Korrektur der Fehlsichtigkeit über die Innenschale 20 und die Lichtführung über die Kanalschale 21 durchgeführt werden, so dass die Korrektur der Fehlsichtigkeit einerseits und die Lichtführung andererseits voneinander unabhängig optisch optimiert werden können. Es kann in vorteilhafter Weise stets die gleiche Kanalschale 21 verwendet werden, um eine Anpassung an unterschiedliche Fehlsichtigkeiten durchzuführen. Dazu muß nur eine individuelle Innenschale 20 vorgesehen und mit der Kanalschale 21 verbunden werden.

Auf der Vorderseite 18 kann ferner eine phototrophe Schicht aufgebracht sein. Eine solche phototrope Schicht kann als passive oder aktive Schicht ausgebildet sein. Damit kann z.B. eine Ausbildung des erfindungsgemäßen Brillenglases als Brillenglas für eine Sonnenbrille verwirklicht werden.

Ferner wird der Benutzer in vorteilhafter Weise das ausgekoppelte Bild über die an ihn angepaßte Rückseite 15 wahrnehmen, so dass er das virtuelle Bild trotz seiner Fehlsichtigkeit scharf wahrnehmen kann.

Bei der in Fig. 2 gezeigten Ausführungsform ist die Dicke der Kanalschicht 21 im wesentlichen konstant.

Es ist jedoch auch möglich, dass die Dicke der Kanalschicht insbesondere im Bereich des Lichtführungskanals 12 in der Richtung vom Einkoppelabschnitt 11 zum Auskoppelabschnitt 13 abnimmt.

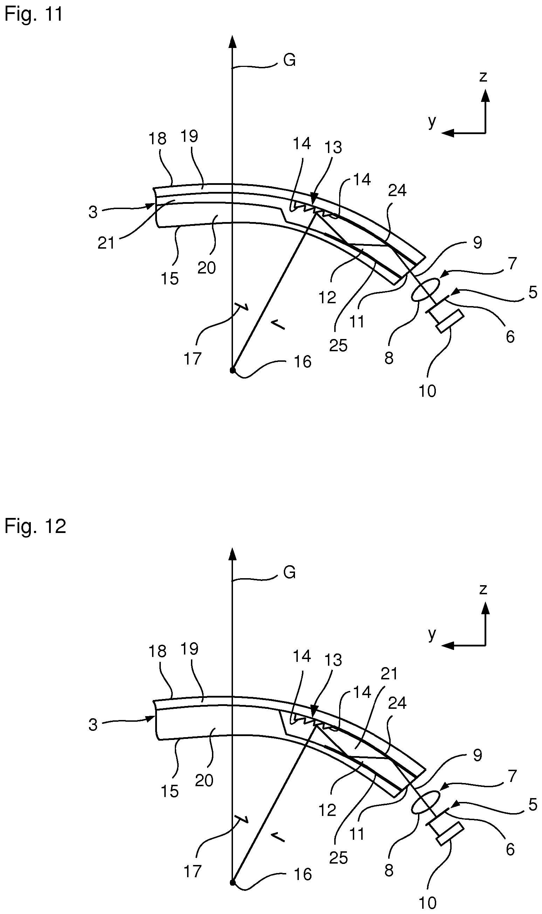

Insbesondere kann die Dicke der Kanalschicht 21 in den Bereichen neben dem Lichtführungskanal 12 geringer sein als im Bereich des Lichtführungskanals 12. Eine solche Ausbildung ist in Fig. 11 dargestellt.

Bei den bisher beschriebenen Ausführungsformen erstreckt sich die Kanalschale 21 über das gesamte erste Brillenglas 3. In diesem Fall kann die Kanalschale 21 auch als Abstandsschale bezeichnet werden, da sie stets zwischen Innenschale 20 und Außenschale 19 liegt, so dass die Innenschale 20 nie in direktem Kontakt mit der Außenschale 19 steht.

Es ist jedoch auch möglich, dass sich die Kanalschale 21 nicht über das gesamte Brillenglas erstreckt. Insbesondere kann sich die Kanalschale 20 nur im Bereich des Lichtführungskanals 12 erstrecken. In diesem Fall kann in den anderen Bereichen, in denen die Kanalschale 21 nicht vorhanden ist, ein direkter Kontakt zwischen Innenschale 20 und Außenschale 19 vorliegen, wie in Fig. 12 dargestellt ist.

Die Vorder- und Rückseite 18, 15 können jeweils sphärisch gekrümmt sein. Die Rückseite 15 kann auch eine asphärische Krümmung aufweisen. Ferner können die beiden Grenzflächen der Kanalschale 21 auch sphärisch gekrümmt sein. Insbesondere sind die Krümmungen der einander gegenüberliegenden Seiten der entsprechenden Schalen 19, 20 und 21 komplementär gewählt, so dass ein flächiger Kontakt hergestellt werden kann.

Das Material von Außenschale 19, Innenschale 20 und Kanalschale 21 ist bevorzugt das gleiche Material, so dass die gleiche Brechzahl vorliegt. Es kann jedoch auch Material mit unterschiedlicher Brechzahl für die einzelnen Schalen 19-21 gewählt werden.

Bei der erfindungsgemäßen Anzeigevorrichtung 1 erfolgt die Einspiegelung des virtuellen Bildes in das Gesichtsfeld des Benutzers über das erste Brillenglas 3. Natürlich ist auch eine Einspiegelung über das zweite Brillenglas 4 möglich. Des weiteren kann die Anzeigevorrichtung 1 so ausgebildet sein, dass Informationen bzw. virtuelle Bilder über beide Brillengläser 3, 4 eingespiegelt werden. Dabei kann die Einspiegelung so erfolgen, dass ein dreidimensionaler Bildeindruck entsteht. Dies ist jedoch nicht zwingend notwendig.

Die Brillengläser 3, 4 können eine Brechkraft von Null oder eine von Null verschiedene Brechkraft (insbesondere zur Korrektur von Fehlsichtigkeiten) aufweisen. Wie in den Figuren gezeigt ist, sind sowohl die Vorderseite 11 als auch die Rückseite 12 des Brillenglases 3 gekrümmt ausgebildet. Die Vorderseite 11 kann insbesondere sphärisch gekrümmt sein. Wenn das Brillenglas eine von Null verschiedene Brechkraft aufweist, um eine Fehlsichtigkeit zu korrigieren, ist in der Regel die Krümmung der Rückseite 15 entsprechend gewählt, um die entsprechende Korrektur zu erreichen. Die Rückseite 15 kann eine von der sphärischen Form abweichende Krümmung aufweisen.

Die Haltevorrichtung 2 muß nicht als brillenartige Haltevorrichtung ausgebildet sein. Es ist auch jede andere Art der Haltevorrichtung möglich, mit der ein Aufsetzen oder Tragen der Anzeigevorrichtung auf dem Kopf des Benutzers erfolgen kann.

## Patentansprüche

1. Brillenglas für eine auf den Kopf eines Benutzers aufsetzbare und ein Bild erzeugende Anzeigevorrichtung (1),
wobei das Brillenglas (3) eine gekrümmte Vorderseite (18) und eine gekrümmte Rückseite (15), einen Einkoppelabschnitt (11) und einen vom Einkoppelabschnitt (11) beabstandeten Auskoppelabschnitt (13) sowie
einen Lichtführungskanal (12) aufweist, der dazu geeignet ist, Lichtbündel (9) von Pixeln des erzeugten Bildes, die über den Einkoppelabschnitt (11) des Brillenglases (3) in das Brillenglas (3) eingekoppelt sind, im Brillenglas (3) bis zum Auskoppelabschnitt (13) zu führen, von dem sie aus dem Brillenglas (3) ausgekoppelt werden,
wobei das Brillenglas (3) mehrschalig aufgebaut ist und eine Außenschale (19) und eine mit der Außenschale (19) verbundene Innenschale (20) aufweist,
wobei zwischen der Außen- und Innenschale (19, 20) eine Kanalschale (21) angeordnet ist, die eine erste Reflexionsfläche (24) und eine zweite Reflexionsfläche (25) aufweist,
wobei der Lichtführungskanal (12) zumindest einen Abschnitt der Kanalschale (21) und die beiden Reflexionsflächen (24, 25), an denen die Lichtbündel (9) zur Führung vom Einkoppelabschnitt (11) zum Auskoppelabschnitt (13) reflektiert werden, aufweist,
wobei die Kanalschale (21) als Abstandsschale zwischen der Außen- und Innenschale (19, 20) angeordnet ist, so dass die Außen- und Innenschale (19, 20) nicht in direktem Kontakt stehen, wobei die Rückseite (15) eine Krümmung aufweist, die so gewählt ist, dass eine Fehlsichtigkeitskorrektur bewirkt wird, und
wobei die Kanalschale (21), die erste Reflexionsfläche (24) und die zweite Reflexionsfläche (25) jeweils gekrümmt ausgebildet sind,
**dadurch gekennzeichnet, dass**
die Innenschale (20) mit der Kanalschale (21) flächig verbunden ist und die Kanalschale (21) mit der Außenschale (19) flächig verbunden ist und
die gekrümmte Kanalschale (21) über die gekrümmte erste Reflexionsfläche (24) mit der Außenschale (19) und über die gekrümmte zweite Reflexionsfläche (25) mit der Innenschale (20) verbunden ist.

2. Brillenglas nach Anspruch 1, **dadurch gekennzeichnet, dass** der Einkoppelabschnitt (11) so ausgebildet ist, dass die Einkopplung über die gekrümmte Rückseite (15) erfolgt.

3. Brillenglas nach einem der obigen Ansprüche, **dadurch gekennzeichnet, dass** die von der Innenschale (20) wegweisende erste Seite der Außenschale (19) die Vorderseite (18) des Brillenglases (3) bildet und die von der Außenschale (19) wegweisende erste Seite der Innenschale (20) die Rückseite (15) des Brillenglases (3) bildet.

4. Brillenglas nach einem der obigen Ansprüche, **dadurch gekennzeichnet, dass** der Auskoppelabschnitt (13) Teil der Kanalschale (21) ist und/oder dass die Innenschale (20), die Kanalschale (21) und die Außenschale (19) aus dem gleichen Material gebildet sind.

5. Brillenglas nach einem der obigen Ansprüche, **dadurch gekennzeichnet, dass** der Auskoppelabschnitt (13) mehrere nebeneinander angeordnete reflektive Umlenkflächen (14) aufweist.

6. Brillenglas nach einem der obigen Ansprüche, **dadurch gekennzeichnet, dass** der Auskoppelabschnitt (13) im Brillenglas (3) vergraben ausgebildet ist und somit sowohl von der Vorderseite (18) als auch von der Rückseite (15) beabstandet ist.

7. Brillenglas nach einem der obigen Ansprüche, **dadurch gekennzeichnet, dass** auf der Vorderseite (18) eine phototrope Schicht gebildet ist.

8. Brillenglas nach einem der obigen Ansprüche, **dadurch gekennzeichnet, dass** die Dicke der Kanalschale (21) im Bereich des Lichtführungskanals (12) größer ist als im restlichen Bereich.

9. Brillenglas nach einem der obigen Ansprüche, **dadurch gekennzeichnet, dass** der Abstand der beiden Reflexionsflächen (24, 25) in der Richtung vom Einkoppelabschnitt (11) zum Auskoppelabschnitt (13) abnimmt.

10. Brillenglas nach einem der obigen Ansprüche, **dadurch gekennzeichnet, dass** mindestens eine der beiden Reflexionsflächen (24, 25) eine abbildende Eigenschaft aufweist.

11. Brillenglas nach einem der obigen Ansprüche, **dadurch gekennzeichnet, dass** mindestens eine der beiden Reflexionsflächen (24, 25) ein Interferenzschichtsystem aufweist und/oder dass mindestens eine der beiden Reflexionsflächen (24, 25) so ausgebildet ist, dass sie für Einfallswinkel im Bereich von 0° bis zu einem vorbestimmten ersten Grenzwinkel von kleiner als 90° transmissiv und für Einfallswinkel größer als ein vorbestimmter zweiter Grenzwinkel reflektiv ist, wobei der zweite Grenzwinkel größer als oder gleich wie der erste Grenzwinkel ist.

12. Anzeigevorrichtung mit
einer auf den Kopf eines Benutzers aufsetzbaren Haltevorrichtung (2),
einem an der Haltevorrichtung (2) befestigten Bilderzeugungsmodul (5), das ein Bild erzeugt, und
einer an der Haltevorrichtung (2) befestigten Abbildungsoptik (7), die ein Brillenglas (3) nach einem der obigen Ansprüche aufweist und die das erzeugte Bild im auf dem Kopf des Benutzers aufgesetzten Zustand der Haltevorrichtung (2) so abbildet, dass es der Benutzer als virtuelles Bild wahrnehmen kann.

## Claims

1. Spectacle lens for a display device (1) that can be fitted on the head of a user and generates an image,
wherein the spectacle lens (3) comprises a curved front side (18) and a curved rear side (15), a coupling-in section (11) and a coupling-out section (13) spaced apart from the coupling-in section (11), as well as
a light guiding channel (12) which is suitable for guiding light bundles (9) of pixels of the generated image, which are coupled into the spectacle lens (3) via the coupling-in section (11) of the spectacle lens (3), in the spectacle lens (3) to the coupling-out section (13), by which they are coupled out of the spectacle lens (3),
wherein the spectacle lens (3) is constructed with several shells and comprises an outer shell (19) and an inner shell (20) which is joined to the outer shell (19),
wherein a channel shell (21), which comprises a first reflecting surface (24) and a second reflecting surface (25), is arranged between the outer and inner shell (19, 20),
wherein the light guiding channel (12) comprises at least one section of the channel shell (21) and the two reflecting surfaces (24, 25) on which the light bundles (9) are reflected for guiding from the coupling-in section (11) to the coupling-out section (13),
wherein the channel shell (21) is arranged between the outer and inner shell (19, 20) as spacer shell, with the result that the outer and inner shell (19, 20) are not in direct contact,
wherein the rear side (15) has a curvature which is chosen such that a correction of defective vision is brought about, and
wherein the channel shell (21), the first reflecting surface (24) and the second reflecting surface (25) are each formed curved, respectively,
**characterized in that**
the inner shell (20) is joined flat to the channel shell (21) and **in that** the channel shell (21) is joined flat to the outer shell (19),
wherein that the curved channel shell (21) is joined to the outer shell (19) via the curved first reflecting surface (24) and to the inner shell (20) via the curved second reflecting surface (25).

2. Spectacle lens according to claim 1, **characterized in that** the coupling-in section (11) is formed such that the coupling-in takes place via the curved rear side (15).

3. Spectacle lens according to one of the above claims, **characterized in that** the first side of the outer shell (19) facing away from the inner shell (20) forms the front side (18) of the spectacle lens (3) and the first side of the inner shell (20) facing away from the outer shell (19) forms the rear side (15) of the spectacle lens (3).

4. Spectacle lens according to one of the above claims, **characterized in that** the coupling-out section (13) is part of the channel shell (21) and/or that the inner shell (20), the channel shell (21) and the outer shell (19) are formed from the same material.

5. Spectacle lens according to one of the above claims, **characterized in that** the coupling-out section (13) comprises several reflective deflecting surfaces (14) arranged next to each other.

6. Spectacle lens according to one of the above claims, **characterized in that** the coupling-out section (13) is formed buried in the spectacle lens (3) and is thus spaced apart both from the front side (18) and the rear side (15).

7. Spectacle lens according to one of the above claims, **characterized in that** a phototropic layer is formed on the front side (18).

8. Spectacle lens according to one of the above claims, **characterized in that** the thickness of the channel shell (21) is greater in the area of the light guiding channel (12) than in the remaining area.

9. Spectacle lens according to one of the above claims, **characterized in that** the distance between the two reflecting surfaces (24, 25) decreases in the direction from the coupling-in section (11) to the coupling-out section (13).

10. Spectacle lens according to one of the above claims, **characterized in that** at least one of the two reflecting surfaces (24, 25) has an imaging property.

11. Spectacle lens according to one of the above claims, **characterized in that** at least one of the two reflecting surfaces (24, 25) comprises an interference layer system and/or that at least one of the two reflecting surfaces (24, 25) is formed such that it is transmissive for an angle of incidence in the range of from 0° up to a predetermined first critical angle of less than 90° and is reflective for an angle of incidence greater than a predetermined second critical angle, wherein the second critical angle is greater than or equal to the first critical angle.

12. Display device with
a holder (2) that can be fitted on the head of a user,
an image-generating module (5) secured to the holder (2), which generates an image, and
an imaging optical system (7) secured to the holder (2), which comprises a spectacle lens (3) according to one of the above claims and which, when the holder (2) is fitted on the head of the user, images the generated image in such a way that the user can perceive it as a virtual image.

## Revendications

1. Verre de lunettes destiné à un dispositif d'affichage (1) pouvant être posé sur la tête d'un utilisateur et générant une image,
le verre de lunettes (3) présentant une face avant incurvée (18) et une face arrière incurvée (15), une section d'injection (11) et une section d'extraction (13) espacée de la section d'injection (11), ainsi qu'un canal de guidage de lumière (12) qui est adapté pour guider dans le verre de lunettes (3) des faisceaux lumineux (9) constitués de pixels de l'image générés, qui sont injectés dans le verre de lunettes (3) par l'intermédiaire de la section d'injection (11) du verre de lunettes (3), jusqu'à la section d'extraction (13) par laquelle ils sont extraits du verre de lunettes (3),
le verre de lunettes (3) ayant une structure multicoques et présentant une coque extérieure (19) et une coque intérieure (20) reliée à la coque extérieure (19),
dans lequel, entre la coque extérieure et la coque intérieure (19, 20) est disposée une coque formant canal (21) qui présente une première surface réfléchissante (24) et une deuxième surface réfléchissante (25),
le canal de guidage de lumière (12) présentant au moins une section de la coque formant canal (21) et les deux surfaces réfléchissantes (24, 25) sur lesquelles les faisceaux lumineux (9) sont réfléchis pour être guidés de la section d'injection (11) à la section d'extraction (13),
la coque formant canal (21) étant disposée sous forme de coque d'espacement entre la coque extérieure et la coque intérieure (19, 20) de sorte que la coque extérieure et la coque intérieure (19, 20) ne sont pas en contact direct,
la face arrière (15) présentant une courbure qui est sélectionnée de façon à provoquer une correction de défaut de vision, et
la coque formant canal (21), la première surface réfléchissante (24) et la deuxième surface réfléchissante (25) étant respectivement réalisées de manière incurvée,
**caractérisé en ce que**
la coque intérieure (20) est reliée sur toute la surface à la coque formant canal (21), et la coque formant canal (21) est reliée sur toute la surface à la coque extérieure (19), et
la coque formant canal (21) incurvée est reliée par l'intermédiaire de la première surface réfléchissante (24) incurvée à la coque extérieure (19) et par l'intermédiaire de la deuxième surface réfléchissante (25) incurvée à la coque intérieure (20) .

2. Verre de lunettes selon la revendication 1, **caractérisé en ce que** la section d'injection (11) est réalisée de telle sorte que l'injection a lieu par l'intermédiaire de la face arrière (15) incurvée.

3. Verre de lunettes selon l'une quelconque des revendications précédentes, **caractérisé en ce que** la première face de la coque extérieure (19), détournée de la coque intérieure (20), constitue la face avant (18) du verre de lunettes (3), et la première face de la coque intérieure (20), détournée de la coque extérieure (19), constitue la face arrière (15) du verre de lunettes (3).

4. Verre de lunettes selon l'une quelconque des revendications précédentes, **caractérisé en ce que** la section d'extraction (13) fait partie de la coque formant canal (21), et/ou **en ce que** la coque intérieure (20), la coque formant canal (21) et la coque extérieure (19) sont formées du même matériau.

5. Verre de lunettes selon l'une quelconque des revendications précédentes, **caractérisé en ce que** la section d'extraction (13) présente plusieurs surfaces de déviation réfléchissantes (14) disposées les unes à côté des autres.

6. Verre de lunettes selon l'une quelconque des revendications précédentes, **caractérisé en ce que** la section d'extraction (13) est réalisée en étant noyée dans le verre de lunettes (3) et est ainsi espacée à la fois de la face avant (18) et de la face arrière (15).

7. Verre de lunettes selon l'une quelconque des revendications précédentes, **caractérisé en ce qu'**une coque photosensible est formée sur la face avant (18).

8. Verre de lunettes selon l'une quelconque des revendications précédentes, **caractérisé en ce que** l'épaisseur de la coque formant canal (21) est plus grande dans la zone du canal de guidage de lumière (12) que dans la zone restante.

9. Verre de lunettes selon l'une quelconque des revendications précédentes, **caractérisé en ce que** l'espacement des deux surfaces réfléchissantes (24, 25) diminue dans la direction de la section d'injection (11) à la section d'extraction (13).

10. Verre de lunettes selon l'une quelconque des revendications précédentes, **caractérisé en ce qu'**au moins l'une des deux surfaces réfléchissantes (24, 25) présente une propriété d'imagerie.

11. Verre de lunettes selon l'une quelconque des revendications précédentes, **caractérisé en ce qu'**au moins l'une des deux surfaces réfléchissantes (24, 25) présente un système de couches d'interférences, et/ou **en ce qu'**au moins l'une des deux surfaces réfléchissantes (24, 25) est réalisée de telle sorte que pour des angles d'incidence dans la plage de 0° jusqu'à un premier angle limite prédéterminé et inférieur à 90°, elle est transmissive, et que pour des angles d'incidence supérieurs à un deuxième angle limite prédéterminé, elle est réfléchissante, le deuxième angle limite étant supérieur ou égal au premier angle limite.

12. Dispositif d'affichage, comprenant
un dispositif de support (2) pouvant être posé sur la tête d'un utilisateur,
un module de génération d'image (5) fixé au dispositif de support (2) et qui génère une image, et
une optique d'imagerie (7) fixée au dispositif de support (2) et présentant un verre de lunettes (3) selon l'une quelconque des revendications précédentes et qui, à l'état où le dispositif de support (2) est posé sur la tête de l'utilisateur, représente l'image générée de sorte que l'utilisateur peut l'apercevoir sous forme d'image virtuelle.
